# EUROPÄISCHE PATENTANMELDUNG

(11) **EP 1 051 897 A1**
(43) Veröffentlichungstag der Anmeldung: **15.11.2000**
(21) Anmeldenummer: 00109553.8
(22) Anmeldetag: 04.05.2000
(51) Int. Cl.: A01D 23/02

(54) **Nachköpfeinrichtung für eine Rübenerntemaschine**

(30) Priorität: 10.05.1999 DE 19921642
(71) Anmelder: Franz Kleine Agrartechnik GmbH, 33154 Salzkotten (DE)
(72) Erfinder: Syring, Klemens, 33154 Salzkotten (DE)
(74) Vertreter: Patentanwälte Rehberg + Hüppe

(57) **Zusammenfassung**

Eine Nachköpfeinrichtung (1) für eine Rübenerntemaschine ist einem Häcksler oder Schlegler zum Entfernen des wesentlichen Teils der Rübenblätter nachgeordnet und weist für jede Rübenreihe (2) ein um eine Drehachse (12) drehbar gelagertes Tastrad (11) zur Höhenführung eines Köpfmessers (7) auf. Dabei ist das Köpfmesser (7) zum Entfernen der Blattstiele (5) und der Rübenblätter von tiefgewachsenen Rüben (3) vorgesehen. Erfindungsgemäß ist das Tastrad (11) um die Drehachse (12) frei drehbar gelagert und weist frei endende Tastzinken (14) auf, die tangential zu einem Kreis (5) um die Drehachse (12) des Tastrads (11) verlaufen.

## Beschreibung

Die Erfindung bezieht sich auf eine Nachköpfeinrichtung für eine Rübenerntemaschine, die einem Häcksler oder Schlegler zum Entfernen des wesentlichen Teils der Rübenblätter nachgeordnet ist und die für jede Rübenreihe ein um eine Drehachse drehbar gelagertes Tastrad zur Höhenführung eines Köpfmessers aufweist, wobei das Köpfmesser zum Entfernen der Rübenblätter von tiefgewachsenen Rüben und der Blattstiele vorgesehen ist.

Vor dem eigentlichen Roden von Rüben mit einer Rübenerntemaschine müssen die Rübenblätter entfernt werden. Dies erfolgt mit einer Einrichtung, die in der Regel einen Schlegler oder Häcksler aufweist, der die Rübenblätter oberhalb der im Boden befindlichen Rüben zerkleinert und damit entfernt. Es versteht sich, daß die Arbeitshöhe des Häckslers bzw. Schleglers so hoch über dem Boden liegen muß, daß die Rüben selbst von dem Häcksler bzw. Schlegler nicht erfaßt werden. Anderenfalls würden die Rüben beschädigt, bzw. ganz oder teilweise zerstört. Der Sicherheitsabstand in der Höhe des Häckslers bzw. Schleglers zu den Rüben führt dazu, daß die Stielansätze der Blätter im Regelfall an den Rüben verbleiben; bei tiefgewachsenen Rüben können sogar Rübenblätter verbleiben, die von dem Schlegler bzw. Häcksler nicht erfaßt werden. Außerdem hinterläßt ein Häcksler bzw. Schlegler bei Rüben, von denen er die Rübenblätter vollständig entfernt, eine rauhe Abtrennfläche. Über die Abtrennfläche besteht die Gefahr, daß die Rüben austrocknen und/oder sich Mikroorganismen einnisten. Beides beeinträchtigt die Qualität und Lagerfähigkeit der Rüben.

Eine bekannte Nachköpfeinrichtung für eine Rübenerntemaschine, die einem Häcksler oder Schlegler zum Entfernen des wesentlichen Teils der Rübenblätter nachgeordnet ist, weist für jede Rübenreihe einen Tastkamm und ein hinter und unter dem Tastkamm angeordnetes Köpfmesser auf. Der Tastkamm und das Köpfmesser sind gemeinsam um eine vorne liegende Schwenkachse verschwenkbar gelagert, so daß die Rüben je nach Wuchshöhe den Tastkamm mehr oder weniger anheben und damit das Köpfmesser in der richtigen Höhe gegenüber der jeweiligen Rübe geführt wird. Aus der EP 0 264 011 B1 ist eine spezielle Ausführungsform einer solchen passiven Nachköpfeinrichtung bekannt, bei der die Köpfdicke, d. h. der Abstand zwischen der Unterseite des Tastkamms und dem Köpfmesser mit zunehmender Wuchshöhe der Rüben abnimmt. Dies ist vorteilhaft, weil die höher gewachsenen Rüben bereits durch den vorgeschalteten Häcksler oder Schlegler weitergehend von den Rübenblättern befreit sind als die tiefer gewachsenen Rüben. Gleichzeitig ist bei der aus der EP 0 264 011 B1 bekannten Nachköpfeinrichtung eine zentrale Verstellmöglichkeiten für die Köpfdicke und für die mittlere Arbeitshöhe von mehreren, mehreren Rübenreihen zugeordneten Nachköpfeinrichtungen einer Rübenerntemaschine vorgesehen. Nachteilig bei den bekannten passiven Nachköpfeinrichtungen ist, daß die Gefahr besteht, daß sich Rübenblätter oder anderes Material zwischen den Tastkämmen und den Köpfmessern festsetzen, so daß letztlich die Schneide der Köpfmesser blockiert ist und kein Nachköpfen der Rüben mehr erfolgt. Zwar enden die Zinken der Tastkämme der bekannten passiven Nachköpfeinrichtungen nach hinten frei und die schneiden der Köpfmesser können zur Arbeitsrichtung der jeweiligen Rübenerntemaschine schräg nach hinten verlaufen, die Gefahr des Zusetzens des Spalts zwischen den Tastkämmen und den Köpfmessern ist dennoch erheblich. Eine dauernde Überwachung der einzelnen Nachköpfeinrichtungen auf ihre Funktion ist für den Bediener einer Rübenerntemaschine mühsam, zumal sich ein solcher Bediener auch noch auf die Überwachung vieler anderer Funktionen konzentrieren muß.

Aus der WO 94/12012 ist eine Nachköpfeinrichtung für eine Rübenerntemaschine der eingangs beschriebenen Art bekannt, bei der ein drehbar gelagertes Tastrad zur Höhenführung eines Köpfmessers vorgesehen ist. Ein Antrieb treibt das Tastrad um seine Drehachse an. Dabei ist das Tastrad nicht nur zur Höhenführung des nachgeschalteten Köpfmessers vorgesehen. Vielmehr weist das Tastrad, das mit einer gewölbten, schräg gestellten Unterseite zu den Rüben hin orientiert ist, Abtrennelemente auf, die durch ihre Rotationsbewegung um die Drehachse des Tastrads ihrerseits Blattstiele und tiefgewachsene Rübenblätter entfernen. Für eine saubere Abtrennfläche ist diesen Tasträdern jeweils ein Köpfmesser nachgeordnet, das seinerseits angetrieben oder bis auf seine Höhenführung feststehend sein kann. Die aus der WO 94/12012 bekannte Nachköpfeinrichtung führt zu etwas höheren Verlusten bei den Rüben als sie bei einer passiven Nachköpfeinrichtung gemäß der EP 0 264 011 B1 auftreten. Die Tasträder mit ihren Abtrennelementen bearbeiten alle Rüben relativ unabhängig von ihrer Wuchshöhe, d. h. unabhängig von ihrer vorherigen Erfassung durch den Häcksler bzw. Schlegler. Zudem muß für eine saubere Schnittfläche den rotierenden Tasträdern immer noch ein Köpfmesser nachgeschaltet werden, das mit einer vergleichsweise großen Köpfdicke relativ zu den Tasträdern eingestellt ist, da diese eine recht rauhe Abtrennfläche zurücklassen, die von den Köpfmessern vollständig nivelliert werden muß. Unabhängig von dem Arbeitsergebnis ist auch zu berücksichtigen, daß die zusätzlichen Antriebe für die Tasträder und die ggf. angetriebenen Köpfmesser einen erheblichen apparativen Zusatzaufwand für eine Rübenerntemaschine darstellen. Ein Zusetzen des Spalts zwischen den Tasträdern und den Köpfmessern bei einer Nachköpfeinrichtung gemäß der WO 94/12012 wird durch die Drehbewegung der Tasträder allerdings nicht beobachtet.

Der Erfindung liegt die Aufgabe zugrunde, eine Nachköpfeinrichtung der eingangs beschriebenen Art aufzuzeigen, die mit geringem apparativen Aufwand realisierbar ist und dennoch die Gefahr des Zusetzens des Spalts zwischen den Höhenabtastmitteln und den Köpfmessern stark reduziert.

Erfindungsgemäß wird diese Aufgabe bei einer Nachköpfeinrichtung der eingangs beschriebenen Art dadurch gelöst, daß das Tastrad um die Drehachse frei drehbar ist und daß das Tastrad frei endende Tastzinken aufweist, die tangential zu einem Kreis um die Drehachse des Tastrads verlaufen. Die neue Nachköpfeinrichtung ist eine passive Nachköpfeinrichtung. Sie weist zumindest im Bereich des Tastrads keinen Antrieb auf. Vielmehr ist das Tastrad um seine Drehachse frei drehbar gelagert. Dennoch wird das Tastrad bei der neuen Nachköpfeinrichtung in einer bestimmten Richtung passiv verdreht. Dies ist auf die tangentiale Anordnung der Tastzinken an dem Tastrad zurückzuführen. Die Oberseiten der Rüben mit den Blattstielen, die in Kontakt mit dem Tastrad treten, gleiten vorzugsweise an den Tastzinken entlang und führen deshalb aufgrund der tangentialen Anordnung der Tastzinken zu einer Drehbewegung des Tastrads. Diese Drehbewegung des Tastrads entfernt jegliches Material, das sich in dem Spalt zwischen dem Tastrad und dem nachgeordneten Köpfmesser festzusetzen droht. Die Rüben streifen auch jegliches Material, das sich insbesondere dann, wenn die Tastzinken nach vorne gerichtet sind, zwischen diese hineinbewegt hat, wieder von den Tastzinken ab, wenn diese nach hinten gestellt sind. Die Voraussetzung hierfür schaffen die frei endenden Tastzinken. Insgesamt wird mit geringem apparativen Zusatzaufwand im Vergleich zu bekannten passiven Nachköpfeinrichtungen eine sehr hohe Sicherheit gegenüber dem Zusetzen des Spalts zwischen dem neuen Abtastmittel und dem Köpfmesser erreicht.

Vorzugsweise ist die Drehachse des Tastrads um 10 bis 45° nach hinten geneigt, wobei der Verlauf der Drehachse von unten nach oben betrachtet wird. Die Rüben treten so im wesentlichen mit dem Teil des Tastrads in Kontakt, bei dem die frei endenden Tastzinken nach hinten gerichtet ist. Hierdurch wird der Umfang reduziert, in dem Rübenblätter und anderes Material von vorne zwischen die Tastzinken gerät.

Weiterhin ist es bevorzugt, daß die Drehachse des Tastrads seitlich gegenüber der Rübenreihe versetzt ist. Hierdurch wird die Kraftausübung auf das Tastrad durch die an den Tastzinken entlang gleitenden Rübenköpfe optimiert. Besonders bevorzugt ist eine Ausrichtung, bei der die jeweils tangential nach vorne gerichtete Tastzinke des Tastrads einen seitlichen Abstand von maximal 3 cm zu der Rübenreihe aufweist. Dieses Merkmal nimmt nicht nur auf die genaue seitliche Ausrichtung der Drehachse des Tastrads Bezug; Es legt zunächsteinmal fest, daß die Rüben vornehmlich mit den quer zur Arbeitsrichtung verlaufenden Tastzinken des Tastrads in Kontakt kommen.

Der Kreis um die Drehachse des Tastrads, von dem die Tastzinken tangential abstehen, weist typischerweise einen Durchmesser von 4 bis 16 cm auf. Der Außenumfang des Tastrads beträgt in Abstimmung auf einen typischen seitlichen Abstand der einzelnen Rübenreihen von 45 cm maximal 40 cm.

Im Bereich des Kreises kann das Tastrad an seiner Unterseite eine geschlossenen Oberfläche aufweisen.

Vorzugsweise weisen die Unterkanten der Tastzinken einen bogenförmigen Verlauf auf. Dieser bogenförmige Verlauf ist auf den Neigungswinkel der Drehachse des Tastrads abzustimmen, so daß die Tastzinken etwa horizontal auslaufen.

Das Köpfmesser der neuen Nachköpfeinrichtung kann gegenüber Bewegungen in seiner Schnittebene feststehend sein. Das heißt, es ist feststehend bis auf seine Höhenführung mit Hilfe des Tastrads. Grundsätzlich ist aber auch denkbar, das Köpfmesser frei oder angetrieben um eine Drehachse drehbar auszubilden.

Ein feststehendes Köpfmesser ist vorzugsweise so angeordnet, daß es bezüglich der Drehachse des Tastrads auf der gegenüberliegenden Seite der Rübenreihe gelagert ist, wobei es auf der Seite der Rübenreihe, auf der die Drehachse des Tastrads angeordnet ist, frei endet und wobei es eine über die Rübenreihe hinweg schräg nach hinten verlaufende Schneide aufweist, die in ihrem vorderen Bereich eine nach vorne gerichtete Krümmung aufweist. Diese Krümmung folgt in etwa dem Umfang des Tastrads und führt zu einem stark ziehenden Ansatz des Köpfmessers an und damit zu einem besonders einfachen Anschnitt der jeweiligen Rübe.

Die Erfindung wird im folgenden anhand eines Ausführungsbeispiels näher erläutert und beschrieben; dabei zeigt
- Figur 1: eine Seitenansicht der Nachköpfeinrichtung, und
- Figur 2: eine Ansicht der Nachköpfeinrichtung von oben.

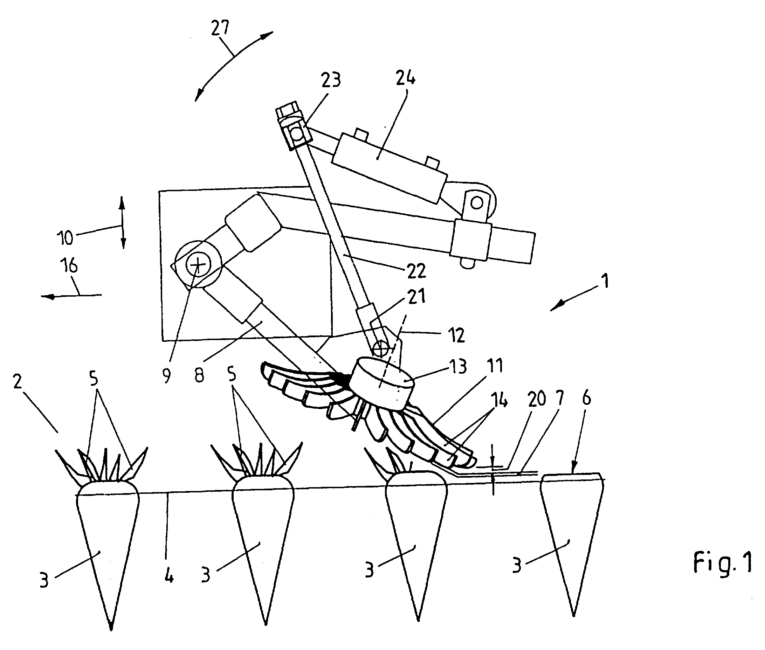

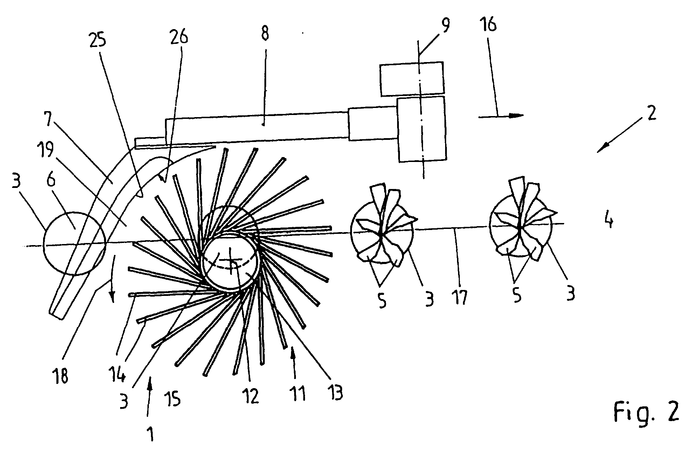

Die in den Figuren 1 und 2 dargestellte Nachköpfeinrichtung 1 ist einer Rübenreihe 2 zugeordnet, die aus einer Mehrzahl von Rüben 3 besteht, die noch im Boden 4 sitzen. Der Nachköpfeinrichtung 1 ist bei der hier nicht weiter dargestellten Rübenerntemaschine ein Schlegler oder Häcksler vorgeschaltet, der die Rübenblätter der Rüben 3 im wesentlichen entfernt. Die Nachköpfeinrichtung 1 ist vorgesehen, um an den Rüben 3 verbliebene Blattstiele 5 und andere Blattreste unter Ausbildung einer möglichst glatten Schnittfläche 6 zu entfernen. Zum Abschneiden der Blattstiele 5 ist ein Köpfmesser 7 vorgesehen, das starr an einem Lenkerarm 8 gelagert ist. Der Lenkerarm 8 ist um eine Schwenkachse 9 verschwenkbar gelagert, die vor und über dem Köpfmesser 7 angeordnet ist. Durch Verschwenken des Lenkerarms 8 um die Schwenkachse 9 kann das Köpfmesser 7 verschiedene Schnitthöhen relativ zur Oberfläche des Bodens 4 einnehmen. Zudem ist die Schwenkachse 9 in Richtung eines in Figur 1 eingezeichneten Doppelpfeils 10 höhenverstellbar, um eine mittlere Arbeitshöhe festzulegen, in der das Köpfmesser 7 genau parallel zu der Oberfläche des Bodens 4 geführt wird. Für die Höhenführung des Köpfmessers 7 relativ zu den einzelnen Rüben 3, die unterschiedlich tief bzw. hoch relativ zu der Oberfläche des Bodens 4 gewachsen sein können, ist ein Tastrad 11 vorgesehen. Das Tastrad 11 ist um eine Drehachse 12 an einer Halterung 13 verdrehbar gelagert. Es weist eine Vielzahl von Tastzinken 14 auf, die von einem Kreis 15 um die Drehachse 12 tangential abstehen. Die Drehachse 12 ist bei Betrachtung ihres Verlaufs von unten nach oben bezüglich der Arbeitsrichtung 16 der Nachköpfeinrichtung 1 nach hinten geneigt. Weiterhin ist sie bezüglich des in Figur 2 durch eine Linie 17 angedeuteten Verlaufs der Rübenreihe 2 derart versetzt seitlich neben der Rübenreihe 2 angeordnet, daß die jeweils parallel zu der Rübenreihe 2 verlaufende Tastzinke 14' etwa mit der Linie 17 fluchtet. Bei dieser Anordnung verdrehen die Oberseiten der Rüben, d. h. insbesondere die hier noch vorhandenen Blattstiele 5 durch ihren Kontakt mit der bogenförmig verlaufenden Unterseiten der Tastzinken 14 und durch ihr Eingreifen zwischen die Tastzinken 14 das Tastrad 11 in Richtung eines in Figur 2 eingezeichneten Pfeils 18. Die Drehbewegung des Tastrads 11 in Richtung des Pfeils 18 relativ zu dem feststehenden Köpfmesser 7 verhindert es, daß sich irgendwelches Material, insbesondere Blattmaterial von den Rüben 3, in dem Bereich 19 zwischen dem Tastrad 11 und dem Köpfmesser 7 und insbesondere in dem vertikalen Spalt 20 zwischen diesen beiden Bauteilen festsetzt. Ein solches Festsetzen könnte die gesamte Nachköpfeinrichtung 1 funktionslos machen. Das Tastrad 11 wird in seiner Funktion als Höhenführung für das Köpfmesser 7 von den Oberseiten der Rüben 3 je nach deren Wuchshöhe angehoben und positioniert so das Köpfmesser 7 relativ zu der jeweiligen Rübe 3. Dabei ist die Drehachse 12 jedoch nicht in starrer Relativanordnung zu dem Hebelarm 8 vorgesehen. Vielmehr ist dazwischen eine weitere Schwenkachse 21 ausgebildet. Über die Schwenkachse 21 ist die Halterung 13 für das drehbare Tastrad 11 an dem Lenkerarm 8 gelagert. Dabei ist als weitere Führung für das Tastrad 11 eine Führungsstange 22 vorgesehen, die ihrerseits in einer oberen Gleitbuchse 23 geführt wird. Diese grundsätzlich aus der EP 0 264 011 B1 bekannte Anordnung führt dazu, daß die Köpfdicke der Nachköpfeinrichtung 1, d. h. der Spalt 20 mit zunehmender Höhe des Tastrads 11 über dem Boden abnimmt, so daß hochgewachsene Rüben, die bereits von dem der Nachköpfeinrichtung vorgeschalteten Häcksler oder Schlegler stärker erfaßt wurden, nicht mehr so stark nachgeköpft werden, wie tiefer gewachsene Rüben. Gleichzeitig ist bei der Nachköpfeinrichtung 1 über einen Hydraulikzylinder 24 die Raumlage der Gleitbuchse 23 in Richtung eines Doppelschwenkpfeils 27 veränderbar, so daß auch die mittlere Köpfdicke, d. h. die Größe des Spalts 20 bei parallel zur Oberfläche des Bodens 4 geführtem Köpfmesser einstellbar ist. Die Einstellbarkeit kann dabei zentral für mehrere Rübenreihen einer mehrreihigen Rübenerntemaschine vorgesehen sein, ebenso wie die Höhenverstellung für die mittlere Arbeitshöhe in Richtung des Doppelpfeils 10. Der Verlauf einer schneide 25 des Köpfmessers 7 ist so, daß sie von vorne nach hinten betrachtet zunächst eine Krümmung 26 aufweist, deren Verlauf ungefähr dem Umfang des Tastrads 11 entspricht. Anschließend verläuft die Schneide 25 im wesentlichen gerade und schräg zur Arbeitsrichtung der Nachköpfeinrichtung nach hinten. Dabei ist die vordere Lagerung des Köpfmessers 7 bezüglich des Verlaufs der Rübenreihe 2 entlang des Linie 17 der Drehachse 12 des Tastrads 11 gegenüberliegend angeordnet. Diese Anordnung führt unter anderem dazu, daß die unterschiedlichen seitlichen Kräfte auf die Nachköpfeinrichtung 1 durch den Kontakt der Rüben mit dem Tastrad 11 und dem Köpfmesser 7 in etwa ausgeglichen sind. Die Kräfte zwischen den Rüben 3 und dem Tastrad 11 versuchen die Drehachse 12 des Tastrads 11 noch weiter von der Rübenreihe 2 zu entfernen. In umgekehrter Richtung wirken die Kräfte zwischen den Rüben 3 und dem Köpfmesser 7.

### BEZUGSZEICHENLISTE

- 1: - Nachköpfeinrichtung
- 2: - Rübenreihe
- 3: - Rübe
- 4: - Boden
- 5: - Blattstiel
- 6: - Schnittfläche
- 7: - Köpfmesser
- 8: - Lenkerarm
- 9: - Schwenkachse
- 10: - Doppelpfeil
- 11: - Tastrad
- 12: - Drehachse
- 13: - Halterung
- 14: - Tastzinke
- 15: - Kreis
- 16: - Arbeitsrichtung
- 17: - Linie
- 18: - Pfeil
- 19: - Bereich
- 20: - Spalt
- 21: - Schwenkachse
- 22: - Führungsstange
- 23: - Gleitbuchse
- 24: - Hydraulikzylinder
- 25: - Schneide
- 26: - Krümmung
- 27: - Doppelschwenkpfeil

## Patentansprüche

1. Nachköpfeinrichtung für eine Rübenerntemaschine, die einem Häcksler oder Schlegler zum Entfernen des wesentlichen Teils der Rübenblätter nachgeordnet ist und die für jede Rübenreihe ein um eine Drehachse drehbar gelagertes Tastrad zur Höhenführung eines Köpfmessers aufweist, wobei das Köpfmesser zum Entfernen der Rübenblätter von tiefgewachsenen Rüben und der Blattstiele vorgesehen ist, **dadurch gekennzeichnet**, daß das Tastrad (11) um die Drehachse (12) frei drehbar gelagert ist und daß das Tastrad (11) frei endende Tastzinken (14) aufweist, die tangential zu einem Kreis (15) um die Drehachse (12) des Tastrads (11) verlaufen.

2. Nachköpfeinrichtung nach Anspruch 1, **dadurch gekennzeichnet**, daß die Drehachse (12) des Tastrads (11) um 10° bis 45° nach hinten geneigt ist.

3. Nachköpfeinrichtung nach Anspruch 1 oder 2, **dadurch gekennzeichnet**, daß die Drehachse (12) des Tastrads (11) seitlich gegenüber der Rübenreihe (2) versetzt ist.

4. Nachköpfeinrichtung nach Anspruch 3, **dadurch gekennzeichnet**, daß die jeweils tangential nach vorn gerichtete Tastzinke (14') des Tastrads (11) einen seitlichen Abstand von maximal 3 cm zu der Rübenreihe (2) aufweist.

5. Nachköpfeinrichtung nach einem der Ansprüche 1 bis 4, **dadurch gekennzeichnet**, daß der Kreis (5) um die Drehachse (12) des Tastrads (11) eine Durchmesser von 4 bis 16 cm aufweist.

6. Nachköpfeinrichtung nach einem der Ansprüche 1 bis 5, **dadurch gekennzeichnet**, daß das Tastrad (11) einen Außenumfang von maximal 40 cm aufweist.

7. Nachköpfeinrichtung nach einem der Ansprüche 1 bis 6, **dadurch gekennzeichnet**, daß das Tastrad (11) an seiner Unterseite im Bereich des Kreises (15) eine glatte geschlossene Oberfläche aufweist.

8. Nachköpfeinrichtung nach einem der Ansprüche 1 bis 7, **dadurch gekennzeichnet**, daß die Unterkanten der Tastzinken (14) einen bogenförmigen Verlauf aufweisen.

9. Nachköpfeinrichtung nach einem der Ansprüche 1 bis 8, **dadurch gekennzeichnet**, daß das Köpfmesser (7) gegenüber Bewegungen in seiner Schnittebene feststehend ist.

10. Nachköpfeinrichtung nach Anspruch 9, **dadurch gekennzeichnet**, daß das Köpfmesser (7) bezüglich der Drehachse (12) des Tastrads (11) auf der gegenüberliegenden Seite der Rübenreihe (2) gelagert ist, auf der Seite der Rübenreihe (2), auf der die Drehachse (12) des Tastrads (11) angeordnet ist, frei endet und eine dazwischen schräg nach hinten verlaufende Schneide (25) aufweist, die in ihrem vorderen Bereich eine nach vorne gerichtete Krümmung (26) aufweist.
